# EUROPÄISCHE PATENTSCHRIFT

(11) **EP 2 652 917 B1**
(45) Veröffentlichungstag und Bekanntmachung des Hinweises auf die Patenterteilung: **17.01.2018**
(21) Anmeldenummer: 12702013.9
(22) Anmeldetag: 30.01.2012
(51) Int. Cl.: H04L 12/46

(54) **ZWISCHENNETZWERK IN RINGTOPOLOGIE UND VERFAHREN ZUM HERSTELLEN EINER NETZWERKVERBINDUNG ZWISCHEN ZWEI NETZWERKDOMÄNEN**
INTERMEDIATE NETWORK IN A RING TOPOLOGY, AND METHOD FOR SETTING UP A NETWORK CONNECTION BETWEEN TWO NETWORK DOMAINS
RÉSEAU INTERMÉDIAIRE DE TOPOLOGIE ANNULAIRE ET PROCÉDÉ DE CRÉATION D'UNE LIAISON DE RÉSEAU ENTRE DEUX DOMAINES D'UN RÉSEAU

(30) Priorität: 14.02.2011 DE 102011004064
(43) Veröffentlichungstag der Anmeldung: 23.10.2013
(73) Patentinhaber: Siemens Aktiengesellschaft, 80333 München (DE)
(72) Erfinder: RIEDL, Johannes, 84030 Ergolding (DE); SCHEFFEL, Matthias, 82008 Unterhaching (DE)
(86) Internationale Anmeldenummer: PCT/EP2012/051396
(87) Internationale Veröffentlichungsnummer: WO 2012/110300

(56) Entgegenhaltungen:
- US-A1- 2003 031 124
- US-A1- 2009 059 800
- US-B1- 7 345 991
- JEONG-DONG RYOO ET AL: "Ethernet ring protection for carrier ethernet networks", IEEE COMMUNICATIONS MAGAZINE, IEEE SERVICE CENTER, PISCATAWAY, US, Bd. 46, Nr. 9, 1. September 2008 (2008-09-01), Seiten 136-143, XP011234299, ISSN: 0163-6804, DOI: 10.1109/MCOM.2008.4623718

## Beschreibung

Die vorliegende Erfindung bezieht sich auf ein Zwischennetzwerk in Ringtopologie, insbesondere in Ethernet-/Schicht-2-Netzwerken, und ein Verfahren zum Herstellen einer ausfallsicheren Netzwerkverbindung zwischen zwei Netzwerkdomänen.

### Stand der Technik

Ethernet-Netzwerkdomänen werden häufig über virtuelle Ethernetverbindungen über ein Zwischennetz miteinander verbunden, um Netzwerkverkehr zwischen den ansonsten disjunkten Netzwerkdomänen zu ermöglichen. Gerade bei industriellen Anwendungen, beispielsweise in der Fabrik- oder Prozessautomatisierung sind Anforderungen an die Zuverlässigkeit und Ausfallsicherheit derartiger Ethernet-Links sehr hoch, um die Sicherheit der vernetzten Komponenten zu gewährleisten.

Ethernetverbindungen zwischen Netzwerkdomänen werden dabei häufig über virtuelle private Netzwerke (VPN) realisiert, beispielsweise einen virtuellen privaten Leitungsdienst ("virtual private wire service", VPWS) oder ein geeignet vorkonfiguriertes virtuelle lokales Netzwerk (VLAN). Dabei werden die virtuellen privaten Netzwerkverbindungen über ein Zwischennetz aufgebaut, dessen Betrieb häufig nicht im Einflussbereich der Netzwerkdomänenbetreiber liegt.

Zum Einen ist es nun erforderlich, Netzwerkverkehr zwischen zwei über ein solches Zwischennetz mithilfe von virtuellen privaten Netzwerkverbindungen verbundenen Netzwerkdomänen zu steuern, so dass keine unerwünschten Datenverkehrsschleifen ("loops") auftreten, zum Anderen soll eine Netzwerksicherheit im Netzwerkverkehr zwischen den Netzwerkdomänen hergestellt werden, die Ausfälle von Netzwerkkomponenten des Zwischennetzes auffangen kann, ohne von den Sicherungsmaßnahmen des Zwischennetzbetreibers abhängig zu sein.

Es ist beispielsweise möglich, die beiden Netzwerkdomänen in ein gemeinsames Netzwerk mit domänenübergreifenden Redundanzprotokollen wie beispielsweise RSTP zu integrieren. Dies erfordert jedoch einen hohen Implementierungsaufwand. Weiterhin erfordert es hohen planerischen Aufwand, netzwerkdomäneninternen Netzwerkverkehr auch domänenintern zu halten, das heißt, es zu verhindern, dass Netzwerkverkehr, der innerhalb einer Domäne stattfinden soll, über das Zwischennetz geleitet wird, und somit unnötige Kosten und Latenzzeiten verursacht. Alternativ können proprietäre Protokolle eingesetzt werden, die es erlauben, Zusatzinformationen über einzelne Verbindungen zwischen den Netzwerkdomänen auszutauschen und so auf eventuell auftretende Fehler zu reagieren. Dieser Lösung mangelt es jedoch an Flexibilität und sie erfordert einen hohen Anpassungsaufwand an die bestehende Infrastruktur.

Die Druckschrift US 2003/0031124 A1 offenbart ein Verfahren zum Verbinden zweier SONET-Netzwerkdomänen, welche jeweils über primäre und sekundäre Randknoten verfügen, über die eine 1+1-Netzwerkverkehrsredundanz in Ringtopologie zum Schutz des Netzwerkverkehrs zwischen den SONET-Netzwerkdomänen implementiert ist. Die Druckschrift "Ethernet Ring Protection for Carrier Ethernet Networks", Jeong-Dong Ryoo Et Al., IEEE Communications Magazine, offenbart ein Redundanzprotokoll für Ethernetnetzwerke, bei welchem Schutzverbindungen zwischen Domänen selektiv freigeschaltet werden.

Es besteht daher ein Bedarf an einfacheren und effektiven Lösungen, Netzwerkdomänen miteinander über ein Zwischennetz zu verbinden.

### Zusammenfassung der Erfindung

Eine Idee der vorliegenden Erfindung ist es daher, zwei untereinander über ein Zwischennetz verbundene und Netzwerkverkehr über das Zwischennetz austauschende disjunkte Netzwerkdomänen so miteinander zu verbinden, dass im Falle eines Ausfalls einer beliebigen Komponente im oder am Rande des Zwischennetzes die Netzwerkverbindung zwischen den Netzwerkdomänen gewährleistet bleibt. Hierzu werden redundante virtuelle Netzwerkverbindungswege durch das Zwischennetz geschaffen, deren Steuerung und Kontrolle unabhängig von der tatsächlich realisierten Netzwerkverbindung durch das Zwischennetz unabhängig ist. Dies bietet den Vorteil, dass der Netzwerkverkehr zwischen zwei Netzwerkdomänen durch ein Zwischennetz auf Seiten der Netzwerkdomänen abgesichert werden kann, ohne auf die Sicherungsmechanismen im Zwischennetz, die häufig nicht im Einflussbereich der Netzwerkdomänenbetreiber liegen, angewiesen zu sein.

Eine Ausführungsform der vorliegenden Erfindung besteht daher in einem Zwischennetzwerk in Ringtopologie nach Anspruch 1 zum Herstellen einer Verbindung zwischen zwei Netzwerkdomänen, mit einem ersten Randknoten und einem zweiten Randknoten, welche Randknoten einer ersten Netzwerkdomäne sind und welche über eine erste Netzwerkverbindung innerhalb der ersten Netzwerkdomäne miteinander verbunden sind, einem dritten Randknoten und einem vierten Randknoten, welche Randknoten einer zweiten Netzwerkdomäne sind und welche über eine zweite Netzwerkverbindung innerhalb der zweiten Netzwerkdomäne miteinander verbunden sind, einer ersten virtuellen Netzwerkverbindung, welche den ersten und den dritten Randknoten über ein Zwischennetz verbindet, und einer zweiten virtuellen Netzwerkverbindung, welche den zweiten und den vierten Randknoten über das Zwischennetz verbindet, wobei die erste Netzwerkverbindung, die zweite Netzwerkverbindung, die erste virtuelle Netzwerkverbindung und die zweite virtuelle Netzwerkverbindung eine Ringtopologie aufweisen, auf der ein Verbindungsredundanzprotokoll implementiert ist. Der erste Randknoten ist dabei als Master-Knoten designiert und dazu ausgelegt, die erste virtuelle Netzwerkverbindung für Netzwerkverkehr zwischen der ersten und der zweiten Netzwerkdomäne zu blockieren und die zweite virtuelle Netzwerkverbindung für Netzwerkverkehr zwischen der ersten und der zweiten Netzwerkdomäne freizugeben, wobei bei einem Ausfall des designierten Master-Knotens einer der weiteren Randknoten als neuer Master-Knoten bestimmt ist.

Gemäß einer vorteilhaften Ausführungsform können die erste Netzwerkdomäne und/oder die zweite Netzwerkdomäne Ethernet-/Schicht-2-Domänen sein.

Gemäß einer weiteren vorteilhaften Ausführungsform können die erste virtuelle Netzwerkverbindung und die zweite virtuelle Netzwerkverbindung virtuelle private Netzwerkverbindungen auf Schicht 2 sein.

Gemäß einer weiteren vorteilhaften Ausführungsform kann das Verbindungsredundanzprotokoll ein Spanning-Tree-Protokoll (STP), insbesondere ein Rapid-Spanning-Tree-Protokoll (RSTP), ein Media-Redundancy-Protokoll (MRP), ein Ethernet-Ring-Protection-Protokoll (ERP) oder ein Ethernet-Automatic-Protection-Switching-Protokoll (EAPS) sein. Derartige Protokolle sind erprobte Redundanzprotokolle, die sich aufgrund der Standardisierung gut in die bestehende Netzwerkdomäneninfrastruktur integrieren lassen.

Gemäß einer weiteren vorteilhaften Ausführungsform kann in der ersten Netzwerkdomäne und/oder der zweiten Netzwerkdomäne jeweils ein domäneninternes Verbindungsredundanzprotokoll implementiert sein. Durch die Kopplung eines Verbindungsredundanzprotokolls in dem Zwischennetzwerk und Verbindungsredundanzprotokollen in den Netzwerkdomänen selbst kann besonders effizient und schnell auf Ausfälle von virtuellen Netzwerkverbindungen in dem Zwischennetz reagiert werden.

Die vorliegende Erfindung schafft weiterhin ein Verfahren zum Herstellen einer Netzwerkverbindung zwischen zwei Netzwerkdomänen nach Anspruch 6, mit den Schritten:
Aufbauen einer ersten virtuellen Netzwerkverbindung zwischen einem ersten Randknoten einer ersten Netzwerkdomäne und einem zweiten Randknoten einer zweiten Netzwerkdomäne über ein Zwischennetz;
Aufbauen einer zweiten virtuellen Netzwerkverbindung zwischen einem dritten mit dem ersten Randknoten verbundenen Randknoten der ersten Netzwerkdomäne und einem vierten mit dem zweiten Randknoten verbundenen Randknoten der zweiten Netzwerkdomäne über das Zwischennetz; und
Implementieren eines Verbindungsredundanzprotokolls in einer durch den ersten, den zweiten, den dritten und den vierten Randknoten gebildeten Ringtopologie.

Das Implementieren des Verbindungsredundanzprotokolls umfasst dabei die Schritte:
Designieren eines Randknotens als Master-Knoten;
Blockieren der dem designierten Master-Knoten zugeordneten virtuellen Netzwerkverbindung für Netzwerkverkehr zwischen der ersten und der zweiten Netzwerkdomäne; und Freigeben der jeweils anderen virtuellen Netzwerkverbindung für Netzwerkverkehr zwischen der ersten und der zweiten Netzwerkdomäne, wobei bei einem Ausfall des designierten Master-Knotens einer der weiteren Randknoten als neuer Master-Knoten bestimmt wird.

Dies bietet den Vorteil, dass Schleifen und Ringschlüsse innerhalb der Ringtopologie der Randknoten durch das Zwischennetz vermieden werden können.

Dadurch kann netzwerkdomänen-interner Datenverkehr nach wie vor innerhalb der jeweiligen Netzwerkdomäne zwischen den zugehörigen Randknoten erfolgen, ohne dass ein Umleiten des Datenverkehrs über die virtuellen Netzwerkverbindungen notwendig ist. Insbesondere beschränkt sich der Datenverkehr über die virtuellen Netzwerkverbindungen in diesem Fall nur auf den notwendigen Netzwerkverkehr zwischen den beiden Netzwerkdomänen.

Vorzugsweise kann im Falle einer auftretenden Störung in der freigegebenen virtuellen Netzwerkverbindung die blockierte virtuelle Netzwerkverbindung freigegeben werden. Durch diese Redundanz kann unabhängig von der Art und Dauer der Störung netzwerkdomänenseitig auf einen Ausfall einer virtuellen Netzwerkverbindung reagiert werden. Die gestörte virtuelle Netzwerkverbindung wird also vorteilhafterweise durch die zunächst blockierte und redundant gehaltene virtuelle Netzwerkverbindung abgesichert.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung eines Netzwerkdomänenarchitektur mit einem Zwischennetzwerk gemäß einer Ausführungsform der Erfindung;
- Fig. 2: eine schematische Darstellung einer Implementierung eines Verbindungsredundanzprotokolls in einem Zwischennetzwerk gemäß einer weiteren Ausführungsform der Erfindung;
- Fig. 3: eine schematische Darstellung einer Netzwerkverbindungsabsicherung im Falle einer Verbindungsstörung in einem Zwischennetzwerk gemäß einer weiteren Ausführungsform der Erfindung; und
- Fig. 4: eine schematische Darstellung eines Verfahrens zum Herstellen einer redundant gesicherten Netzwerkverbindung zwischen zwei Netzwerkdomänen gemäß einer weiteren Ausführungsform der Erfindung darstellen.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

Netzwerkdomänen im Sinne der vorliegenden Erfindung sind in sich abgeschlossene Netzwerke mit Netzwerkknoten und Netzwerkverbindungen zwischen den Netzwerkknoten. Dabei weisen die Netzwerkdomänen Randknoten auf, die neben Verbindungen in die Netzwerkdomänen selbst Verbindungen aus der Netzwerkdomäne heraus bereitstellen können. Netzwerkdomänen können beispielsweise Produktionszellen oder Steuerstellen in einer Fertigungs- oder Systemanlage, Maschinenzellen in Fabrikanlagen, Automatisierungskomponenten einer Automatisierungsanlage oder ähnliche mit einem internen Netzwerk versehene Komponenten sein. Derartige Netzwerkdomänen können mit einem Kommunikationsprotokoll auf Kommunikations-Schicht 1 und/oder 2 (Bitübertragungsschicht bzw. Sicherungsschicht) betrieben werden, beispielsweise einem Ethernet-Protokoll, zum Beispiel in einem PROFINET-Framework.

Verbindungsredundanzprotokolle im Sinne der vorliegenden Erfindung können Netzwerkprotokolle sein, die redundante Pfade in Netzwerken deaktivieren, um unerwünschte Netzwerkverkehrsringschlüsse zu vermeiden und die deaktivierten Pfade im Falle von Netzwerkstörungen aktivieren, um die Netzwerkverkehrssicherheit in dem Netzwerk abzusichern. Derartige Verbindungsredundanzprotokolle können beispielsweise Spanning-Tree-Protokolle (STP) wie das Rapid-Spanning-Tree-Protokoll (RSTP), das Media-Redundancy-Protokoll (MRP), das Media-Redundancy-Real-Time-Protokoll (MRRT), das Ethernet-Ring-Protection-Protokoll (ERP), das Ethernet-Automatic-Protection-Switching-Protokoll (EAPS), das High-Availability-Seamless-Redundancy-Protokoll (HSR) oder das Parallel-Redundancy-Protokoll (PRP) sein. Selbstverständlich können auch andere Redundanzprotokolle auf Kommunikationsschicht 1 oder 2 ebenso eingesetzt werden.

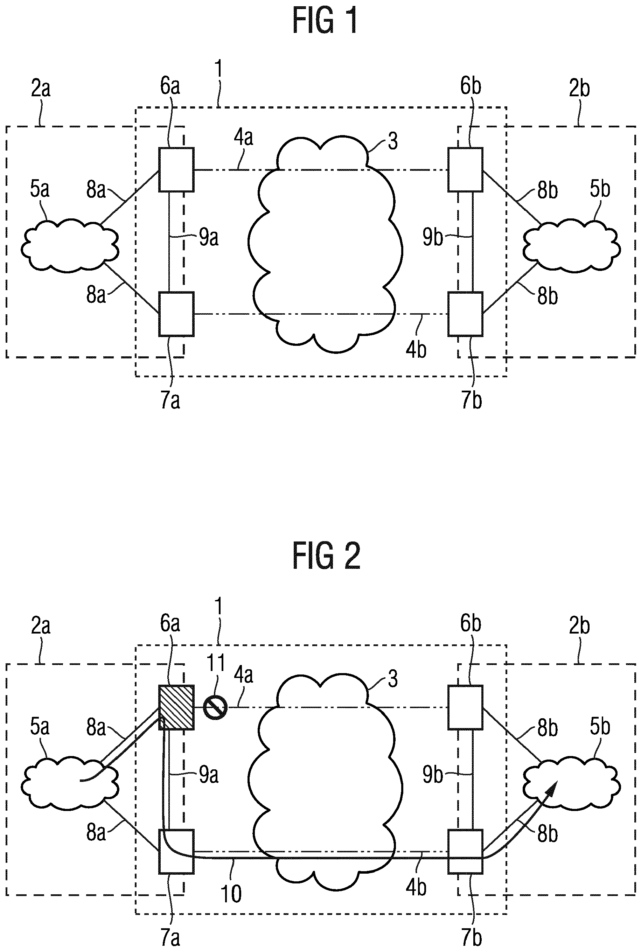

Fig. 1 zeigt eine schematische Darstellung einer Netzwerkdomänenarchitektur mit einem Zwischennetzwerk 1. Das Zwischennetzwerk verbindet zwei disjunkte Netzwerkdomänen 2a und 2b. Die Netzwerkdomänen 2a und 2b besitzen jeweils ein domäneninternes Netzwerk bzw. Kernnetzwerk 5a, 5b, welche über Verbindungen 8a, 8b mit Randknoten 6a, 6b bzw. 7a, 7b verbunden sind. Die Randknoten 6a, 6b bzw. 7a, 7b stellen Verbindungsmöglichkeiten außerhalb der Netzwerkdomänen 2a, 2b bereit und sind jeweils über Randverbindungen 9a, 9b untereinander verbunden. Die Randverbindungen 9a, 9b können selbstverständlich weitere nicht dargestellte Komponenten beinhalten.

Dabei sind die Randknoten 6a und 6b über eine erste virtuelle Netzwerkverbindung 4a über das Zwischennetz 3, und die Randknoten 7a und 7b über eine zweite virtuelle Netzwerkverbindung 4b über das Zwischennetz 3 verbunden. Die virtuellen Netzwerkverbindungen 4a, 4b sind jeweils getunnelte Verbindungen auf der Basis von virtuellen privaten Netzwerkverbindungen (VPN), das heißt, die virtuellen Netzwerkverbindungen 4a, 4b sind bezüglich möglicher zwischengeschalteter (nicht gezeigter) Netzwerkkomponenten des Zwischennetzes 3 transparent. Die virtuellen Netzwerkverbindungen 4a, 4b sind jeweils unabhängig voneinander, das heißt, knoten- und kantendisjunkt. Da das Zwischennetzwerk auf virtuellen Netzwerkverbindungen 4a, 4b aufgebaut ist, kann es auch als virtuelles Zwischennetzwerk bezeichnet werden.

Fig. 2 zeigt eine schematische Darstellung einer Implementierung eines Verbindungsredundanzprotokolls in dem Zwischennetzwerk 1. Die Randknoten 6a, 7a, 6b, 7b bilden zusammen mit den Netwerkverbindungen 9a, 9b sowie den virtuellen Netzwerkverbindungen eine Ringtopologie für das Zwischennetzwerk 1. In dieser Ringtopologie ist ein Verbindungsredundanzprotokoll implementiert, welches verhindert, dass unerwünschte Netzwerkverkehrsschleifen auftreten. Das Verbindungsredundanzprotokoll ist dazu ausgelegt, zunächst einen der Randknoten 6a, 7a, 6b, 7b als sogenannten Master-Knoten auszuwählen, das heißt, als Knoten, der die Datenweiterleitung über die zur Verfügung stehenden Netzwerkverbindungen 4a, 4b, 9a und 9b verwaltet und steuert. Beispielhaft ist in Fig. 2 der Randknoten 6a als Master-Knoten ausgewählt, es ist jedoch selbstverständlich ebenso möglich, dass einer der anderen Randknoten 6b, 7a oder 7b als Master-Knoten ausgewählt werden. Im Beispiel in Fig. 2 sind die Randknoten 6b, 7a, 7b dem Master-Knoten 6a untergeordnete Slave-Knoten, die der Steuerung durch den Master-Knoten 6a unterliegen.

Der Master-Knoten 6a verhindert im Rahmen des Verbindungsredundanzprotokolls, dass sich unerwünschte Netzwerkverkehrsschleifen bilden. Hierzu wird ein Ringschluss über die Netzwerkverbindungen 4a, 4b, 9a und 9b verhindert, indem beispielsweise eine der Netzwerkverbindungen, in Fig. 2 die Netzwerkverbindung 4a für gewöhnlichen Netzwerkverkehr blockiert wird. Dazu kann es beispielsweise vorgesehen sein, dass ein Port 11 des Master-Knotens 6a, der zur Kommunikation mit dem Randknoten 6b dient, blockiert wird. Vorzugsweise ist es vorgesehen, dass die blockierte Netzwerkverbindung eine der beiden virtuellen Netzwerkverbindungen 4a, 4b ist, damit netzwerkdomäneninterner Netzwerkverkehr, beispielsweise Netzwerkverkehr innerhalb der Netzwerkdomäne 2a, auch weiterhin über die Netzwerkverbindung 9a geleitet werden kann, ohne einen kostspieligen Umweg hoher Latenzzeit über das Zwischennetz 3 durchlaufen zu müssen.

Netzwerkverkehr, der im Kernnetzwerk 5a der Netzwerkdomäne 2a generiert wird und an das Kernnetzwerk 5b der Netzwerkdomäne 2b übertragen werden soll, ist beispielhaft mit dem Bezugszeichen 10 gekennzeichnet. Dabei kann der Netzwerkverkehr 10 über die Netzwerkverbindung 8a zunächst zum Master-Knoten 6a geleitet. An dem Master-Knoten 6a wird der Netzwerkverkehr dann nicht über die blockierte virtuelle Netzwerkverbindung 4a durch das Zwischennetz 3 geleitet, sondern über die Randverbindung 9a an den Randknoten 7a übermittelt. Von dort wird der Netzwerkverkehr 10 über die priorisierte virtuelle Netzwerkverbindung 4b über das Zwischennetz 3 an den Randknoten 7b übertragen, von wo aus der Netzwerkverkehr 10 über die Netzwerkverbindung 8b an das Kernnetzwerk 8b übertragen wird.

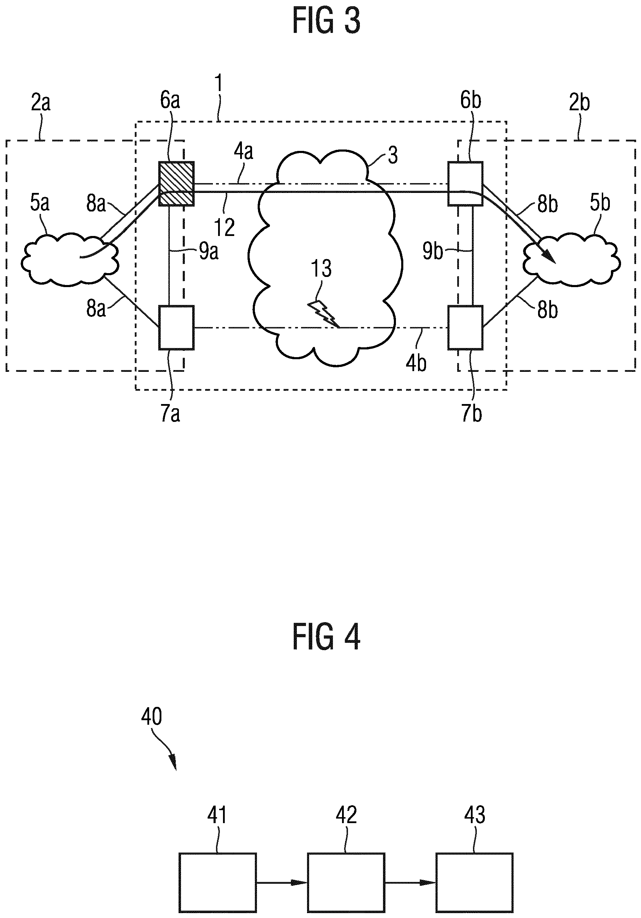

Fig. 3 zeigt eine schematische Darstellung einer Netzwerkverbindungsabsicherung im Falle einer Verbindungsstörung 13 in einem Zwischennetzwerk 1.

Das Zwischennetzwerk 1 der Fig. 3 entspricht dem Zwischennetzwerk 1 der Fig. 2, in dem der Randknoten 6a beispielhaft als Master-Knoten ausgewählt ist. In Fig. 3 ist weiterhin der Fall dargestellt, dass eine Störung 13 in dem Zwischennetz 3 aufgetreten ist. Die Störung 13 kann beispielsweise ein Knotenausfall, ein Verbindungsausfall, eine Verbindungsunterbrechung, ein Stromausfall, oder eine sonstige permanente oder temporäre Störung sein, die den reibungslosen und fehlerfreien Ablauf der Netzwerkverkehrsübertragung über die priorisierte virtuelle Netzwerkverbindung 4b verhindert. Es kann beispielsweise vorgesehen sein, dass die Störung 13 über das Ausbleiben und/oder Nicht-Empfangen einer vordefinierten Anzahl von "Hello"-Nachrichten von Randknoten 7b an Randknoten 7a festgestellt wird. Sobald eine Störung 13 in der virtuellen Netzwerkverbindung 4b festgestellt worden ist, können im Rahmen des Verbindungsredundanzprotokolls des Zwischennetzwerks 1 Gegenmaßnahmen eingeleitet werden.

Hierzu kann es vorgesehen sein, dass der Master-Knoten 6a die bislang blockierte, redundante virtuelle Netzwerkverbindung 4a für den gewöhnlichen Netzwerkverkehr freigibt. Dies kann permanent erfolgen, oder so lange, bis die Störung 13 innerhalb des Zwischennetzes 3 wieder behoben worden ist.

Es kann weiterhin sein, dass der Master-Knoten 6a selbst ausfällt. In diesem Fall kann es im Rahmen des Verbindungsredundanzprotokolls vorgesehen sein, dass einer der übrigen Randknoten 6b, 7a, 7b als neuer Master-Knoten bestimmt wird, und Netzwerkverkehr unter Ausschluss des ausgefallenen Randknotens 6a über die übrigen Verbindungen 8a, 4b, 8b und 9b umgeleitet wird.

Fig. 4 zeigt eine schematische Darstellung eines Verfahrens 40 zum Herstellen einer redundant gesicherten Netzwerkverbindung zwischen zwei Netzwerkdomänen, insbesondere zwischen zwei Netzwerkdomänen wie in den Fig. 1 bis 3 gezeigt. In einem ersten Schritt 41 erfolgt ein Designieren eines Randknotens als Master-Knoten. In einem zweiten Schritt 42 erfolgt ein Blockieren der dem designierten Master-Knoten zugeordneten virtuellen Netzwerkverbindung für Netzwerkverkehr zwischen der ersten und der zweiten Netzwerkdomäne. In einem dritten Schritt erfolgt ein Freigeben der jeweils anderen virtuellen Netzwerkverbindung für Netzwerkverkehr zwischen der ersten und der zweiten Netzwerkdomäne.

## Patentansprüche

1. Zwischennetzwerk (1) in Ringtopologie zum Herstellen einer Verbindung zwischen zwei Netzwerkdomänen (2a, 2b), mit:
einem ersten Randknoten (6a) und einem zweiten Randknoten (7a), welche Randknoten einer ersten Netzwerkdomäne (2a) sind und welche über eine erste Netzwerkverbindung (9a) innerhalb der ersten Netzwerkdomäne (2a) miteinander verbunden sind;
einem dritten Randknoten (6b) und einem vierten Randknoten (7b), welche Randknoten einer zweiten Netzwerkdomäne (2b) sind und welche über eine zweite Netzwerkverbindung (9b) innerhalb der zweiten Netzwerkdomäne (2b) miteinander verbunden sind;
einer ersten virtuellen Netzwerkverbindung (4a), welche den ersten (6a) und den dritten Randknoten (6b) über ein Zwischennetz (3) verbindet; und
einer zweiten virtuellen Netzwerkverbindung (4b), welche den zweiten (7a) und den vierten Randknoten (7b) über das Zwischennetz (3) verbindet,
wobei die erste Netzwerkverbindung (9a), die zweite Netzwerkverbindung (9b), die erste virtuelle Netzwerkverbindung (4a) und die zweite virtuelle Netzwerkverbindung (4b) eine Ringtopologie aufweisen, auf der ein Verbindungsredundanzprotokoll implementiert ist,
**dadurch gekennzeichnet, dass**
der erste Randknoten als Master-Knoten (6a) designiert ist und dazu ausgelegt ist, die erste virtuelle Netzwerkverbindung (4a) für Netzwerkverkehr zwischen der ersten und der zweiten Netzwerkdomäne (2a, 2b) zu blockieren und die zweite virtuelle Netzwerkverbindung (4b) für Netzwerkverkehr zwischen der ersten und der zweiten Netzwerkdomäne (2a, 2b) freizugeben;
wobei bei einem Ausfall des designierten Master-Knotens (6a) einer der weiteren Randknoten (6b, 7a, 7b) als neuer Master-Knoten bestimmt ist.

2. Zwischennetzwerk (1) nach Anspruch 1, wobei die erste Netzwerkdomäne (2a) und/oder die zweite Netzwerkdomäne (2b) Ethernet-/Schicht-2-Domänen sind.

3. Zwischennetzwerk (1) nach einem der Ansprüche 1 und 2, wobei die erste virtuelle Netzwerkverbindung (4a) und die zweite virtuelle Netzwerkverbindung (4b) virtuelle private Netzwerkverbindungen auf Schicht 2 sind.

4. Zwischennetzwerk (1) nach einem der Ansprüche 1 bis 3, wobei das Verbindungsredundanzprotokoll ein Spanning-Tree-Protokoll, ein Media-Redundancy-Protokoll, ein Ethernet-Ring-Protection-Protokoll oder ein Ethernet-Automatic-Protection-Switching-Protokoll umfasst.

5. Zwischennetzwerk (1) nach Anspruch 4, wobei in der ersten Netzwerkdomäne (2a) und/oder der zweiten Netzwerkdomäne (2b) ein domäneninternes Verbindungsredundanzprotokoll implementiert ist.

6. Verfahren zum Herstellen einer Netzwerkverbindung zwischen zwei Netzwerkdomänen (2a, 2b), mit den Schritten:
Aufbauen einer ersten virtuellen Netzwerkverbindung (4a) zwischen einem ersten Randknoten (6a) einer ersten Netzwerkdomäne (2a) und einem zweiten Randknoten (6b) einer zweiten Netzwerkdomäne (2b) über ein Zwischennetz (3);
Aufbauen einer zweiten virtuellen Netzwerkverbindung (4b) zwischen einem dritten mit dem ersten Randknoten (6a) verbundenen Randknoten (7a) der ersten Netzwerkdomäne (2a) und einem vierten mit dem zweiten Randknoten (6b) verbundenen Randknoten (7b) der zweiten Netzwerkdomäne (2b) über das Zwischennetz (3);
Implementieren eines Verbindungsredundanzprotokolls in einer durch den ersten, den zweiten, den dritten und den vierten Randknoten (6a, 6b, 7a, 7b) gebildeten Ringtopologie,
**dadurch gekennzeichnet, dass** das Implementieren des Verbindungsredundanzprotokolls die Schritte umfasst:
Designieren eines Randknotens als Master-Knoten (6a);
Blockieren (11) der dem designierten Master-Knoten (6a) zugeordneten virtuellen Netzwerkverbindung (4a) für Netzwerkverkehr zwischen der ersten und der zweiten Netzwerkdomäne (2a, 2b); und
Freigeben der jeweils anderen virtuellen Netzwerkverbindung (4b) für Netzwerkverkehr zwischen der ersten und der zweiten Netzwerkdomäne (2a, 2b);
wobei bei einem Ausfall des designierten Master-Knotens (6a) einer der weiteren Randknoten (6b, 7a, 7b) als neuer Master-Knoten bestimmt wird.

7. Verfahren nach Anspruch 6, weiterhin mit dem Schritt:
Freigeben der blockierten virtuellen Netzwerkverbindung (4a), falls eine Störung (13) in der freigegebenen virtuellen Netzwerkverbindung (4b) auftritt.

8. Verfahren nach einem der Ansprüche 6 und 7, wobei die erste Netzwerkdomäne (2a) und/oder die zweite Netzwerkdomäne (2b) Ethernet-/Schicht-2-Domänen sind.

9. Verfahren nach einem der Ansprüche 6 bis 8, wobei die erste virtuelle Netzwerkverbindung (4a) und die zweite virtuelle Netzwerkverbindung (4b) virtuelle private Netzwerkverbindungen auf Schicht 2 sind.

10. Verfahren nach einem der Ansprüche 6 bis 9, wobei das Verbindungsredundanzprotokoll ein Spanning-Tree-Protokoll, ein Media-Redundancy-Protokoll, ein Ethernet-Ring-Protection-Protokoll oder ein Ethernet-Automatic-Protection-Switching-Protokoll umfasst.

11. Verfahren nach einem der Ansprüche 6 bis 10, weiterhin mit dem Schritt:
Implementieren eines domäneninternen Verbindungsredundanzprotokolls in der ersten Netzwerkdomäne (2a) und/oder der zweiten Netzwerkdomäne (2b).

## Claims

1. Intermediate network (1) in a ring topology for setting up a connection between two network domains (2a, 2b), having:
a first marginal node (6a) and a second marginal node (7a), which are marginal nodes of a first network domain (2a) and which are connected to one another via a first network connection (9a) within the first network domain (2a) ;
a third marginal node (6b) and a fourth marginal node (7b), which are marginal nodes of a second network domain (2b) and which are connected to one another via a second network connection (9b) within the second network domain (2b) ;
a first virtual network connection (4a), which connects the first (6a) and the third marginal node (6b) via an intermediate network (3); and
a second virtual network connection (4b), which connects the second (7a) and the fourth marginal node (7b) via the intermediate network (3),
wherein the first network connection (9a), the second network connection (9b), the first virtual network connection (4a) and the second virtual network connection (4b) have a ring topology on which a connection redundancy protocol is implemented,
**characterised in that**
the first marginal node is designated as the master node (6a) and is designed to block the first virtual network connection (4a) for network traffic between the first and the second network domain (2a, 2b), and to release the second virtual network connection (4b) for network traffic between the first and the second network domain (2a, 2b);
wherein in the event of a failure of the designated master node (6a) one of the further marginal nodes (6b, 7a, 7b) is defined as the new master node.

2. Intermediate network (1) according to claim 1, wherein the first network domain (2a) and/or the second network domain (2b) are Ethernet/Layer 2 domains.

3. Intermediate network (1) according to one of claims 1 and 2, wherein the first virtual network connection (4a) and the second virtual network connection (4b) are virtual private network connections on Layer 2.

4. Intermediate network (1) according to one of claims 1 to 3, wherein the connection redundancy protocol comprises a Spanning Tree Protocol, a Media Redundancy Protocol, an Ethernet Ring Protection Protocol or an Ethernet Automatic Protection Switching Protocol.

5. Intermediate network (1) according to claim 4, wherein a domain-internal connection redundancy protocol is implemented in the first network domain (2a) and/or the second network domain (2b).

6. Method for setting up a network connection between two network domains (2a, 2b), with the following steps:
establishment of a first virtual network connection (4a) between a first marginal node (6a) of a first network domain (2a) and a second marginal node (6b) of a second network domain (2b) via an intermediate network (3);
establishment of a second virtual network connection (4b) between a third marginal node (7a) of the first network domain (2a) connected to the first marginal node (6a), and a fourth marginal node (7b) of the second network domain (2b) connected to the second marginal node (6b) via the intermediate network (3);
implementation of a connection redundancy protocol in a ring topology formed by the first, the second, the third and the fourth marginal nodes (6a, 6b, 7a, 7b),
**characterised in that** the implementation of the connection redundancy protocol comprises the following steps:
designation of a marginal node as the master node (6a);
blocking (11) of the virtual network connection (4a) assigned to the designated master node (6a) for network traffic between the first and the second network domain (2a, 2b); and
release of the respective other virtual network connection (4b) for network traffic between the first and the second network domain (2a, 2b);
wherein in the event of a failure of the designated master node (6a) one of the further marginal nodes (6b, 7a, 7b) is defined as the new master node.

7. Method according to claim 6, furthermore with the following step:
release of the blocked virtual network connection (4a), in the event of a fault (13) occurring in the released virtual network connection (4b).

8. Method according to one of claims 6 and 7, wherein the first network domain (2a) and/or the second network domain (2b) are Ethernet/Layer 2 domains.

9. Method according to one of claims 6 to 8, wherein the first virtual network connection (4a) and the second virtual network connection (4b) are virtual private network connections on Layer 2.

10. Method according to one of claims 6 to 9, wherein the connection redundancy protocol comprises a Spanning Tree Protocol, a Media Redundancy Protocol, an Ethernet Ring Protection Protocol or an Ethernet Automatic Protection Switching Protocol.

11. Method according to one of claims 6 to 10, furthermore with the following step:
implementation of a domain-internal connection redundancy protocol in the first network domain (2a) and/or the second network domain (2b).

## Revendications

1. Réseau intermédiaire (1) de topologie en anneau servant à créer une liaison entre deux domaines de réseau (2a, 2b), comprenant :
un premier noeud d'extrémité (6a) et un second noeud d'extrémité (7a) qui appartiennent à un premier domaine de réseau (2a) et qui sont reliés entre eux par une première liaison de réseau (9a) à l'intérieur du premier domaine de réseau (2a),
un troisième noeud d'extrémité (6b) et un quatrième noeud d'extrémité (7b) qui appartiennent à un second domaine de réseau (2b) et qui sont reliés entre eux par une seconde liaison de réseau (9b) à l'intérieur du second domaine de réseau,
une première liaison de réseau virtuelle (4a) qui relie le premier noeud d'extrémité (6a) et le troisième noeud d'extrémité (6b) par un réseau interconnecté (3), et
une seconde liaison de réseau virtuelle (4b) qui relie le second noeud d'extrémité (7a) et le quatrième noeud d'extrémité (7b) par le réseau interconnecté (3),
dans lequel la première liaison de réseau (9a), la seconde liaison de réseau (9b), la première liaison virtuelle de réseau (4a) et la seconde liaison virtuelle de réseau (4b) présentent une topologie en anneau, sur laquelle un protocole de redondance de liaison est mis en oeuvre,
**caractérisé en ce que** le premier noeud d'extrémité est désigné en tant que noeud maître et est conçu de façon à bloquer la première liaison de réseau virtuelle (4a) quant au trafic du réseau entre le premier et le second domaines de réseau (2a, 2b) et à débloquer la seconde liaison de réseau virtuelle (4b) quant au trafic du réseau entre le premier et le second domaines de réseau (2a, 2b), et
en cas de défaillance du noeud maître désigné (6a), un des autres noeuds d'extrémité (6a, 7a, 7b) est désigné en tant que nouveau noeud maître.

2. Réseau intermédiaire (1) selon la revendication 1, dans lequel le premier domaine de réseau (2a) et/ou le second domaine de réseau (2b) sont des domaines Ethernet / de couche 2.

3. Réseau intermédiaire (1) selon l'une des revendications 1 et 2, dans lequel la première liaison de réseau virtuelle (4a) et la seconde liaison de réseau virtuelle (4b) sont des liaisons de réseau virtuelles privées en couche 2.

4. Réseau intermédiaire (1) selon l'une quelconque des revendications 1 à 3, dans lequel le protocole de redondance de liaison comprend un protocole Spanning Tree, un protocole de redondance de médias (MRP), un protocole de protection de réseau en anneau Ethernet ou un protocole de commutation automatique de protection.

5. Réseau intermédiaire (1) selon la revendication 4, dans lequel un protocole de redondance de liaison interne au domaine est mis en oeuvre dans le premier domaine de réseau (2a) et/ou dans le second domaine de réseau (2b).

6. Procédé pour créer une liaison de réseau entre deux domaines de réseau (2a, 2b), comprenant les étapes suivantes :
réalisation d'une première liaison de réseau virtuelle (4a) entre un premier noeud d'extrémité (6a) d'un premier domaine de réseau (2a) et un second noeud d'extrémité (6b) d'un second domaine de réseau (2b) par un réseau interconnecté (3),
réalisation d'une seconde liaison de réseau virtuelle (4b) entre un troisième noeud d'extrémité (7a) du premier domaine de réseau (2a) relié au premier noeud d'extrémité (6a) et un quatrième noeud d'extrémité (7b) du second domaine de réseau (2b) relié au second noeud d'extrémité (6b) par le réseau interconnecté (3), et
mise en oeuvre d'un protocole de redondance de liaison dans une topologie de réseau formée par le premier, le second, le troisième et le quatrième noeuds d'extrémité (6a, 6b, 7a, 7b),
**caractérisé en ce que** la mise en oeuvre du protocole de redondance de réseau comprend les étapes suivantes :
désignation d'un noeud d'extrémité en tant que noeud maître (6a),
blocage (11) de la liaison de réseau (4a) virtuelle affectée au noeud maître (6a) désigné concernant le trafic entre le premier et le second domaines de réseau (2a, 2b), et
déblocage de l'autre liaison respective de réseau virtuelle (4b) concernant le trafic entre le premier et le second domaines de réseau (2a, 2b),
dans lequel, en cas de défaillance du noeud maître désigné (6a), un des autres noeuds d'extrémité (6b, 7a, 7b) est désigné en tant que nouveau noeud maître.

7. Procédé selon la revendication 6, comprenant en outre l'étape suivante :
déblocage de la liaison de réseau virtuelle bloquée (4a) dans le cas où une perturbation (13) de la liaison de réseau virtuelle (4b) débloquée se produit.

8. Procédé selon l'une des revendications 6 et 7, dans lequel le premier domaine de réseau (2a) et/ou le second domaine de réseau (2b) sont des domaines Ethernet/ en couche 2.

9. Procédé selon l'une des revendications 6 à 8, dans lequel la première liaison de réseau virtuelle (4a) et la seconde liaison de réseau virtuelle (4b) sont des liaisons de réseau virtuelles privées en couche 2.

10. Procédé selon l'une des revendications 6 à 9, dans lequel le protocole de redondance de liaison comprend un protocole Spanning Tree, un protocole de redondance de médias (MRP), un protocole de protection de réseau en anneau Ethernet ou un protocole de commutation automatique de protection.

11. Procédé selon l'une des revendications 6 à 10, comprenant en outre l'étape suivante :
mise en oeuvre d'un protocole de redondance de liaison interne au domaine dans le premier domaine de réseau (2a) et/ou dans le second domaine de réseau (2b).
